# EUROPÄISCHE PATENTSCHRIFT

(11) **EP 1 414 645 B1**
(45) Veröffentlichungstag und Bekanntmachung des Hinweises auf die Patenterteilung: **31.12.2008**
(21) Anmeldenummer: 02764711.4
(22) Anmeldetag: 17.07.2002
(51) Int. Cl.: B32B 27/18, B32B 3/10

(54) **KUNSTSTOFFKÖRPER MIT NIEDRIGER WÄRMELEITFÄHIGKEIT, HOHER LICHTTRANSMISSION UND ABSORPTION IM NAHEN INFRAROTBEREICH**
PLASTIC BODY HAVING LOW THERMAL CONDUCTIVITY, HIGH LIGHT TRANSMISSION AND A CAPACITY FOR ABSORPTION IN THE NEAR-INFRARED REGION
CORPS EN MATIERE PLASTIQUE A FAIBLE CONDUCTIBILITE THERMIQUE, A HAUTE TRANSMISSION DE LA LUMIERE ET A ABSORPTION DANS LA ZONE INFRAROUGE PROCHE

(30) Priorität: 09.08.2001 DE 10138134; 28.08.2001 DE 10141314
(43) Veröffentlichungstag der Anmeldung: 06.05.2004
(73) Patentinhaber: Evonik Röhm GmbH, 64293 Darmstadt (DE)
(72) Erfinder: GROOTHUES, Herbert, 64331 Weiterstadt (DE); MENDE, Volker, 64297 Darmstadt (DE); LORENZ, Hans, 64291 Darmstadt (DE); SCHARNKE, Wolfgang, 64283 Darmstadt (DE); ITTMANN, Günther, 64823 Gross-Umstadt (DE); HASSKERL, Thomas, 61476 Kronberg (DE); BRAND, Norbert, 64291 Darmstadt (DE); SCHÄFER, Bernhard, 64521 Gross-Gerau (DE)
(74) Vertreter: Gottschalk, Michael
(86) Internationale Anmeldenummer: PCT/EP2002/007932
(87) Internationale Veröffentlichungsnummer: WO 2003/013849

(56) Entgegenhaltungen:
- EP-A- 0 569 878
- EP-A- 0 679 614
- WO-A-01/18101
- WO-A-93/02853
- PATENT ABSTRACTS OF JAPAN vol. 1998, no. 11, 30. September 1998 (1998-09-30) & JP 10 157023 A (ASAHI CHEM IND CO LTD), 16. Juni 1998 (1998-06-16) in der Anmeldung erwähnt

## Beschreibung

Die Erfindung betrifft einen Kunststoffkörper mit niedriger Wärmeleitfähigkeit, hoher Lichttransmission und Absorption im nahen Infrarotbereich auf einer Seite des Körpers und dessen Verwendung als wärmedämmendes und sonnenschützendes Bedachungs- und Verglasungsmaterial.

### Stand der Technik

Die Patentschrift EP 0 548 822 B1 beschreibt einen lichtdurchlässigen, IR-reflektierenden Körper, enthaltend ein amorphes Basismaterial aus lichtdurchlässigem Kunststoff und IR-reflektierenden, parallel zur Oberfläche ausgerichteten Teilchen, die in einer 5 bis 40 µm dicken, and dem Basismaterial haftenden Überzugsschicht aus einem transparenten Bindemittel angeordnet sind und dessen Selektivitätskennzahl nach DIN 67507 größer als 1,15 ist.

Derartige Kunststoffkörper mit coextrudierten Schichten, die IR-reflektierende Perlglanzpigmente enthalten, sind z. B. in Form von Stegvierfachplatten aus Polymethylmethacrylat handelsüblich. Bekannt sind auch entsprechend beschichtete Polycarbonat-Platten, die als Stegdoppelplatten oder zweischichtige Fachwerkplatten ausgeführt sind.

Transparente, IR-absorbierende Körper aus Kunststoffen werden beschrieben in:
EP 927741: Thermoplastische Kunststoffe, die eine Kupferdithiocarbamatverbindung enthalten und spritzgegossen werden können. JP 10157023: Thermoplastische Kunststoffe, die IR-absorbierende Dithiolmetallkomplexe enthalten.
EP 607031, JP 06240146:Thermoplastische Kunststoffe, die IR-absorbierende Phthalocyaninmetallkomplexe enthalten
JP 61008113: IR-absorbierende Klebefolien, die auf Verglasungen aufgebracht werden können
JP 56129243, EP 19097: Kunststoffplatten aus Methylmethacrylat, die als IR-Absorber organische Kupferphosphatkomplexe enthalten.
WO 01/18101 beschreibt Formmassen, enthaltend IR-absorbierende Farbstoffe. Die Formmassen eignen sich u. a. auch zur Herstellung von Hohlraumplatten, Doppelstegplatten oder Multistegplatten, die optional auch zusätzlich mit einer oder mehreren coextrudierten Schicht versehen sein können. Bei einer solchen Ausführung enthält der gesamte Formkörper das IR-absorbierende Pigment. Dies hat den Nachteil, daß die absorbierte Wärme den gesamten Kunststoffkörper erwärmt und die Wärme unspezifisch nach allen Seiten abgegeben wird.
EP 0 569 878 A2 beschreibt Kunststoffverbunde aus einer Kernschicht aus Polycarbonat-Kunststoff, enthaltend nicht mehr als 0,5 Gew.% eines UV-Absorbers, mit zumindest einseitig auflaminierten Deckschichten aus Polycarbonat, enthaltend wenigstens 1 Gew.-% eines UV-Absorbers.
EP 0 679 614 A1 beschreibt Glasplatten, die mit einer ersten Filmschicht, enthaltend UV- und IR-Absorber, beschichtet sind, die wiederum mit einer zweiten Schicht aus einem Siloxan-Polymer abgedeckt ist.

### Aufgabe und Lösung

Aufgabe der vorliegenden Erfindung ist es einen auf einfache Weise herstellbaren Kunststoffkörper bereitzustellen, der als Verglasung-, Bedachungs- und/oder als Dämmelement verwendet werden kann und der eine gegenüber dem Stand der Technik verbesserter Schutz gegenüber der Aufheizung durch Sonnenlicht ermöglicht. Bevorzugt soll es möglich sein einen klar transparenten Kunststoffkörper bereitzustellen.

Die Aufgabe wird gelöst durch einen
Kunststoffkörper, bestehend aus einem Basisformkörper, der aus einem transparenten thermoplastischen Kunststoff-Basismaterial gefertigt ist, und der aus mindestens zwei gegenüber liegenden flächigen Schichten (1 a, 1 b) besteht, die durch senkrechte oder diagonal angeordnete Stege (2) miteinander verbunden sind, wobei eine der flächigen Schichten (1 a) mit einer zusätzlichen Schicht (3) aus einer Kunststoffmatrix aus transparentem Kunststoff-Basismaterial versehen ist,
dadurch gekennzeichnet, dass
die zusätzliche Schicht (3) eine IR-absorbierende Schicht ist, die einen die Transparenz des Kunststoffkörpers nicht beeinträchtigenden IR-Absorber enthält, der im Bereich der nahen Infrarotstrahlung (780nm bis 1100 nm) eine mittlere Transmission von weniger als 80% aufweist, der Kunststoffkörper eine Lichttransmission (D65) von 15 bis 86%, eine Wärmedurchgangszahl von 4 W/m²K oder kleiner und eine SK-Zahl von 1,15 oder größer aufweist.

Gegenüber den bekannten IR-reflektierenden Kunststoffkörpern sind die bekannten IR-reflektierenden Pigmente vom Perlglanztyp ersetzt durch IR-absorbierende Verbindungen. Da letzte quasi in der Kunststoffmatrix löslich sind, beeinträchtigen sie die Transparenz des Kunststoffkörpers per se nicht. Man erhält statt eines transluzenten Kunststoffkörpers einen transparenten Kunststoffkörper. Im Gegensatz zu den IR-reflektierenden Pigmenten, welche die Wärme nach außen zurückstrahlen, ergibt sich bei der Verwendung des IR-Absorbers das Problem, daß die Wärme in die Kunststoffmatrix aufgenommen wird. Es besteht daher grundsätzlich die Gefahr einer Überhitzung des Kunststoffs bei Exposition mit Sonneneinstrahlung. Überraschenderweise kann dieser Effekt jedoch ausgeglichen werden, indem der IR-Absorber in Kombination mit einem Kunststoffkörper, der aus zwei oder mehr parallel angeordneten flächige Schichten (1 a, 1 b, gegebenenfalls 1 c, 1 d etc.) besteht, die durch senkrecht oder diagonal angeordnete Stege (2) miteinander verbunden sind. Die in der IR-absorbierenden Schicht entstehende Wärme wird aufgrund der Konvektion hauptsächlich nach oben abgegeben. Dadurch kann nur wenig Wärme in die Kammern der Platten, z. B. den Kammern in einer Stegdoppelplatte, gelangen. Das Resultat ist ein Kunststoffkörper der gleichzeitig eine Wärmedurchgangszahl von 4 W/m²K oder kleiner mit einer SK-Zahl von mindestens 1,15 verbindet. Dieser synergistische Effekt von IR-Absorber und darunter liegenden Luftkammern verstärkt sich bei einer mehrschichtigen Platten, z. B. mit zwei bis fünf Schichten bzw. Gurten, also bei Stegmehrfachplatten, insbesondere bei Stegdreifachplatten oder Stegvierfachplatten oder mehrschichtigen Fachwerkstegplatten nochmals, da die unteren Luftschichten eine zusätzlich wärmedämmende Wirkung entfalten.

Übersteigt die Anzahl der Schichten ein Optimum nimmt der synergistische Effekt wieder ab. In diesem Fall vermindert sich die Lichttransmission T stärker als der Gesamtenergiedurchlassgrad g, so daß die Selektivitätskennzahl T/g in unerwünschter Weise abnimmt. Dieser nachteilige Effekt tritt bei Platten mit sechs oder mehr Schichten auf.

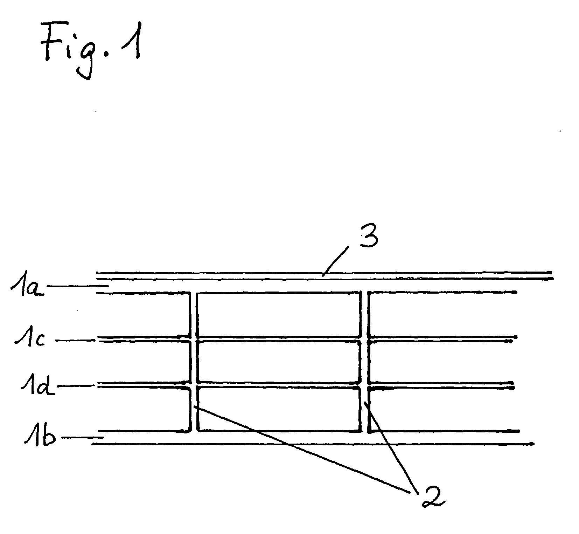

Die Erfindung wird durch die **Figur 1** beispielhaft erläutert, ist aber nicht auf diese Darstellung beschränkt.

Fig 1: Schematischer Querschnitt durch eine Stegvierfachplatte mit (1 a) Obergurt, (1 b) Untergurt, Zwischengurten (1 c) und (1d). Stegen (2) und äußerer Schicht (3), die den IR-Absorber enthält.

### Ausführung der Erfindung

Die Erfindung betrifft einen Kunststoffkörper, bestehend aus einem Basisformkörper, der aus einem transparentem thermoplastischen Kunststoff-Basismaterial gefertigt ist, und der aus mindestens zwei gegenüber liegenden flächigen Schichten (1 a, 1 b) besteht, die durch senkrechte oder diagonal angeordnete Stege (2) miteinander verbunden sind, wobei eine der flächigen Schichten (1a) mit einer zusätzlichen Schicht (3) aus einer Kunststoffmatrix aus transparentem Kunststoff-Basismaterial versehen ist,
dadurch gekennzeichnet, dass
die zusätzliche Schicht (3) eine IR-absorbierende Schicht ist, die einen oder mehrere die Transparenz des Kunststoffkörpers nicht beeinträchtigenden IR-Absorber enthält, der im Bereich der nahen Infrarotstrahlung (780nm bis 1100 nm) eine mittlere Transmission von weniger als 80, bevorzugt weniger als 65 %, aufweist, der Kunststoffkörper eine Lichttransmission (D65, DIN 67 507) von 15 bis 86, bevorzugt von 25 bis 70, insbesondere von 35 bis 65 %, eine Wärmedurchgangszahl (nach DIN 52612) von 4 oder kleiner, bevorzugt von **1,5** bis 3 W/m²K und eine Selektivitätskennzahl (SK-Zahl, T/g nach DIN 67 507) von 1,15 oder größer, bevorzugt 1,2 bis 1,8, insbesondere 1,3 bis 1,6 aufweist.

### Der Basisformkörper

Der Basisformkörper besteht aus mindestens zwei gegenüber liegenden flächigen Schichten (1a, 1b), die durch senkrechte oder diagonal angeordnete Stege (2) miteinander verbunden sind. Die flächigen Schichten liegen bevorzugt parallel zueinander gegenüber. Bei einer Stegdoppelplatte z B. liegen zwei parallel gegenüberliegende Gurtschichten, nämlich der Obergurt (1 a) und Untergurt (1 b), mit entsprechenden Stegen (2) vor. Eine Stegdreifachplatte weist zusätzlich einen parallel zu Ober- und Untergurt angeordneten Zwischengurt (1 c) auf. Bei einer Fachwerkstegplatte können die Stege zumindest teilweise diagonal angeordnet sein.

Der Basisformkörper kann demnach eine Stegdoppelplatte, insbesondere eine Stegmehrfachplatte, bevorzugt eine Stegdreifachplatte oder besonders bevorzugt eine Stegvierfachplatte oder eine Fachwerkstegplatte sein.

**Übliche Abmessungen sind:**
Dicke der Platten im Bereich von 10 bis 60 mm.
Breite 300 bis 3000 mm.
Dicke der Ober- und Untergurte: ca. 1 bis 3 mm
Dicke der Zwischengurte und Stege: ca. 0,3 bis 2 mm.
Längen: bis ca. 6000 mm oder mehr (bei Bedarf entsprechend abgelängt)

### Materialien

Der Basisformkörper besteht im wesentlichen aus einem transparenten thermoplastischen Kunststoff-Basismaterial, das ein z. B. ein Polymethylmethacrylat-Kunststoff, ein schlagzäh modifiziertes Polymethylmethacrylat (siehe z. B. EP-A 0 733 754), ein Polycarbonat-Kunststoff (verzweigtes oder lineares Polycarbonat), ein Polystyrol-Kunststoff, Styrol-Acryl-Nitril-Kunststoff, ein Polyethylentherephthalat-Kunststoff, ein glykolmodifizierter Polyethylentherephthalat-Kunststoff, ein Polyvinylchlorid-Kunststoff, ein transparenter Polyolefin-Kunststoff (z. B. durch metallocenkatalysierte Polymerisation herstellbar) oder ein Acrylnitril-Butadien-Stryrol (ABS)-Kunststoff sein kann. Es kann auch auch Mischungen (Blends) verschiedener thermoplastischer Kunststoffe bestehen.

Ein transparentes thermoplastisches Kunststoff-Basismaterial hat z. B. eine Lichttransmission (D65) von 15 bis 92, bevorzugt 65 bis 90 %.

Bei bestimmten Anwendungen, z. B. wenn eine Blendung durch sehr intensive Sonnenstrahlung vermeiden werden soll, kann dem transparenten thermoplastischen Kunststoff-Basismaterial auch ein Streumittel, z. B. BaSO₄, z. B. in Mengen von 0,5 bis 5 Gew.-%, oder ein anderes Lichtstreumittel, z. B. Lichtstreuperlen zugesetzt werden, wodurch der ursprünglich transparente Kunststoff lichtstreuend, transluzent wird.

Lichtstreuperlen können z. B. in Konzentrationen von 0,1 bis 30 Gew.-%, bevorzugt 0,5 bis 10 Gew.-% zugesetzt werden. Vernetzte Lichtstreuperlen aus Copolymeren aus Methymethacrylat und Styrol oder Benzylmethacrylat, die insbesondere für Basisformkörper aus Polymethylmethacrylat geeignet sind, sind z. B. bekannt z. B. aus DE 35 28 165 C2, EP 570 782 B1 oder EP 656 548 A2.

### Die IR-absorbierende Schicht

Die außen liegende Schicht des Kunststoffkörpers (1 a), bei einer Stegplatte als Obergurt bezeichnet, weist bevorzugt auf ihrer Außenseite eine zusätzliche Schicht (3) aus Kunststoff, die eine IR-absorbierende Schicht ist, die einen oder mehrere IR-Absorber enthält. Die zusätzliche Schicht (3) kann eine coextrudierte Schicht, eine Lackschicht oder eine auflaminierte Folienschicht sein.

Die Schichtdicke der zusätzlichen Schicht (3) liegt z. B. im Bereich von 2 bis 250 µm.
Die Schichtdicken coextrudierter Schichten (3) liegen bevorzugt im Bereich von 5 bis 250, bevorzugt von 20 bis 150, insbesondere 50 bis 125 µm.
Die Schichtdicken laminierter Schichten (3) liegen bevorzugt im Bereich von 10 bis 250, bevorzugt von 10 bis 100 µm.
Die Schichtdicken lackierter Schichten (3) liegen nach der Trocknung bevorzugt im Bereich von 2 bis 50, bevorzugt von 5 bis 25 µm.

Weniger bevorzugt, jedoch auch möglich kann die zusätzliche Schicht (3) mit dem Basisformkörper nicht fest verbunden sein. Die zusätzliche Schicht (3) kann als separate Platte oder Folie im Extrusions- oder Gussverfahren hergestellt und im Verbund mit Basisformkörper, z. B. mit Hilfe eines Rahmens, montiert werden oder mit Hilfe eines Haftvermittlers verbunden werden. Die Schichtdicken können dann z. B. 10 bis 250, bevorzugt von 10 bis 100 µm für aufgelegte Folien oder 250 µm bis 5 mm, bevorzugt 1 bis 4 mm für Platten betragen.

Die IR-absorbierende Schicht (3) kann zusätzlich einen UV-Absorber in üblichen Konzentrationen, z. B. 0,1 bis 15 Gew.-%, enthalten, um den IR-Absorber und die Kunststoff-Matrix vor Abbau durch UV-Strahlung zu schützen. Der UV Absorber kann ein flüchtiger, niedermolekularer, ein wenig flüchtiger, hochmolekularer oder ein einpolymerisierbarer UV-Absorber sein (s. z.B. EP 0 359 622 B1).

Die Kunststoffmatrix der IR absorbierenden Schicht (3) besteht aus transparentem Kunststoff-Basismaterial, das thermoplastisch, thermoelastisch oder vernetzt sein kann. Bevorzugt besteht das Kunststoff-Basismaterial der IR absorbierenden Schicht (3) aus demselben Typ von transparenten, thermoplastischen Kunststoff-Basismaterial, aus dem auch der Basisformkörper besteht, also z. B. aus einem Polymethylmethacrylat-Kunststoff, einem schlagzäh modifizierten Polymethylmethacrylat-Kunststoff, einem Polycarbonat-Kunststoff (verzweigtes oder lineares Polycarbonat), einem Polystyrol-Kunststoff, einem Polyethylentherephthalat-Kunststoff oder einem Acrylnitril-Butadien-Stryrol (ABS)-Kunststoff.

Dabei kann der Basisformkörper z. B. aus einer höher viskoseren Variante eines Kunststoff-Typs bestehen, z. B. Polymethylmethacrylat, und die Kunststoffmatrix aus einer niedriger viskosen Variante des gleichen Typs, z. B. einem niedrigviskoseren Polymethylmethacrylat, das sich z. B. besonders gut für die Coextrusion eignet.

Durch die Anwesenheit des IR-Absorbers erscheint die äußere Schicht (3) und dadurch der gesamte Kunststoffkörper, je nach eingesetztem IR-Absorber grünlich bis bläulich türkis. In Fällen, in denen man dieser Farbeindruck vermeiden oder mildern möchte, kann man ein lichtstreuendes Pigment, z. B. ein Weißpigment, z. B. Bariumsulfat, in Mengen von 0,5 bis 5 Gew.-% zusetzen. Die hat den technischen Vorteil, daß der Blendeffekt bei durchscheinender Sonne gemildert wird, indem das Licht gestreut wird. Gegebenenfalls kann durch Zugabe von Farbstoffen eine Kompensation des Farbeindrucks erreicht werden.

Bei bestimmten Anwendungen, z. B. wenn eine Blendung durch sehr intensive Sonnenstrahlung vermeiden werden soll, kann dem transparenten Kunststoff-Basismaterial der zusätzlichen Schicht (3) auch ein Streumittel, z. B. BaSO₄ oder ein anderes Lichtstreumittel, z. B. Lichtstreuperlen zugesetzt werden, wodurch der ursprünglich transparente Kunststoff lichtstreuend, transluzent, wird.

Gegebenenfalls kann sich auf der zusätzliche Schicht (3) aus transparentem Kunststoff, die eine IR-absorbierende Schicht, noch eine oder mehrere weitere z. B. coextrudierte, lackierte oder laminierte Schicht aus Kunststoff, bevorzugt transparentem Kunststoff befinden. In diesem Fall liegt die IR-absorbierende Schicht nicht außen sondern innerhalb der äußeren Schicht des Kunststoffkörpers. Die weitere oder die weiteren Schichten können verschiedene Funktionen haben, z. B. mechanischer Schutz der IR-absorbierenden Schicht, z. B. als kratzfeste Beschichtung, Anti-Graffity-Beschichtung, UV-Absorber-Schicht, Pigment-haltige Schicht, um einen Farbeindruck zu bewirken etc.. bevorzugt liegen die Schichtdicken der weiteren Schichten im Bereich von 2 bis 200, bevorzugt von 5 bis 60 µm.

Es kann z. B. sinnvoll sein im Falle einer Stegplatte aus Polycarbonat auf die IR-Absorber-Schicht noch eine zusätzliche z. B. coextrudierte Schicht aufzubringen, die einen UV-Absorber enthält und das Polycarbonat vor vorzeitiger Verwitterung schützt (Stegplatten aus Polycarbonat mit zusätzlicher UV-Absorber-Schicht sind z. B. aus EP 0 359 622 B1 bekannt). Der UV Absorber kann ein flüchtiger, niedermolekularer, ein wenig flüchtiger, hochmolekularer oder ein einpolymerisierbarer UV-Absorber sein und in einer Schicht mit einer Schichtdicke z. B. im Bereich 2 bis 100 µm in einer Konzentration von z. B. 2 bis 15 Gew.-% enthalten sein.

### Der IR-Absorber

Die Verwendung der zur Ausführung der Erfindung geeigneten IR-absorbierenden Verbindungen als Zusatz zu verschiedenen thermoplastischen Kunststoffen ist im Prinzip bekannt (siehe Stand der Technik).

Die zusätzliche Schicht (3) enthält einen die Transparenz des Kunststoffkörpers nicht beeinträchtigenden IR-Absorber. Dies bedeutet, daß der Kunststoffkörper in Gegenwart des enthaltenen IR-Absorbers klar durchsichtig bleibt. Dies ist möglich, da der IR-Absorber in der Kunststoffmatrix der zusätzlichen Schicht quasi löslich oder mit einpolymerisiert ist. Da lösliche IR-Absorber relativ hochmolekular sind, kommt es in der Regel nicht zu einer Migration in darunter oder gegebenenfalls darüber liegende Kunststoffschichten.

Der IR-Absorber kann eine organische Cu(11)-Phosphat-Verbindungen sein. Bevorzugt ist z. B. eine organische Cu(11)-Phosphat-Verbindungen, die aus 4 Gewichts-Teilen Phosphorsäuremethacryloyloxyethylester (PMOE) und einem Gewichts-Teil Kupfer-(11)-carbonat (KCB) erhalten werden kann (siehe Beispiel 1).
Geeignet sind weiterhin z. B. organische Cu(11)-phosphat-Komplexe, wie z. B. in den Patenten JP 56129243 und EP 19097 beschrieben. Diese Verbindungen können z. B. als Co-Monomere in polymerisierenden Lackschichten aus Polymethylmethacrylat-Kunststoff eingesetzt werden. Durch ihre vernetzende Wirkung vermitteln sie zugleich eine erhöhte Kratzfestigkeit der Kunststoff-Oberfläche.

Der IR-Absorber kann ein Phthalocyaninderivat sein. Bevorzugt sind Phthalocyaninderivate wie z. B. wie in den Patenten EP 607031 und JP 06240146 beschrieben.

Der IR-Absorber kann ein Perylen-Derivat sein oder z. B. eine Quaterrylentetracarbonsäureimid-Verbindung sein, wie z. B. in EP 596 292 beschrieben.

Bevorzugt sind die nicht vernetzende Verbindungen, da sich diese z. B. für das Coextrusionsverfahren oder für das Aufbringen in nicht polymerisierenden Lacken eignen, die nach dem Abdampfen eines Lösungsmittels von selbst aushärten. Der Auftrag einer IR-absorbierenden Schicht durch Laminieren mit vorgefertigten Folien hat den Vorteil, das die Folienherstellung in der Regel eine gleichmäßigere Schichtdickenverteilung erlaubt. Auflaminierte Folienschichten, die den IR-Absorber enthalten sind meist gleichmäßiger als entsprechende coextrudierte Schichten. IR-Absorber mit hohem Molekulargewicht oder einpolymerisierend IR-Absorber haben den Vorteil besonders migrationsstabil zu sein, d.h. sie wandern bei hohen Herstellungs- oder Gebrauchstemperaturen oder in Zuge der Nutzungsdauer praktisch nicht in die darunter oder gegebenenfalls darüber liegenden Kunststoff-Schichten.

Der IR-Absorber liegt in einer coextrudierten oder laminierten Kunststoff-Matrix in einer Konzentration von 0,01 bis 5, bevorzugt von 0,05 bis 2, insbesondere 0,1 bis 0,5 Gew.-% vor.

In polymerisierenden Lacksystemen kann die Konzentration z. B. 0,1 bis 5 Gew.% bezogen auf die Lacktrockensubstanz betragen.

In nicht polymerisierenden Lacksystemen kann die Konzentration z. B. 0,2 bis 5 Gew.% bezogen auf die Lacktrockensubstanz betragen.

### Selektivitätskennzahl (SK-Zahl, T/g nach DIN 67 507)

Das Verhältnis zwischen Lichttransmissionsgrad (T) und Gesamtenergiedurchlassgrad (g) soll größer als 1,15 bevorzugt 1,2 bis 1,8, insbesondere 1,3 bis 1,6 sein. Der Gesamtenergiedurchlassgrad (g) beschreibt den Anteil der Energie der Sonnenstrahlung, der durch den Körper hindurchgeht. Er setzt sich zusammen aus direkt transmittierter Strahlung und einen durch Absorption erzeugten Wärmeanteil. Die hohe Wärmedämmung wird dadurch erreicht, dass der Körper aus mindestens zwei massiven Schichten besteht, die jeweils durch Luftkammern thermisch entkoppelt sind. Die Schichten sind durch dünnen Stege miteinander verbunden. Die IR-absorbierende Schicht besteht aus einer am Basismaterial haftenden Überzugsschicht aus einem transparenten Kunststoff, die eine oder mehrere IR-absorbierende Verbindungen enthält. Konzentration der IR-absorbierenden Verbindung und Schichtdicke der Überzugsschicht sind bevorzugt z. B. so zu wählen, dass das Maximum der Absorption im Bereich zwischen 780 und 1100 nm mindestens 25%, insbesondere mindestens 50 % beträgt. Die mittlere Absorption im Bereich zwischen 780 und 1100 nm kann z. B. bevorzugt mindestens 5, besonders bevorzugt mindestens 10, insbesondere mindestens 15 % betragen. Die Geometrie der Mehrfachstegplatte ist so zu wählen, dass die Wärmedurchgangszahl nach DIN 52612 kleiner oder gleich 4, bevorzugt 3 bis 1,5 W/m² K ist.

### Verwendung

Der erfindungsgemäße Kunststoffkörper kann als Verglasungs-, Überdachungs-oder Wärmedämmelement verwendet werden.

### Vorteile der Erfindung

Der Energieanteil des Lichts an der Sonnenstrahlung beträgt ca. 50%, der UV-Strahlungsanteil beträgt ca. 5% und ca. 45% entfällt auf die NIR-Strahlung. Alle drei Strahlungsarten tragen zur Aufheizung von verglasten Räumen bei. Wärmeschutzverglasungen nach dem Stand der Technik basieren entweder auf Reflexion oder auf Absorption der Sonnenstrahlung.
Einfache Systeme reduzieren den Gesamtenergiedurchlassgrad durch Reduktion der Strahlungstransmission im gesamten Bereich der Sonnenstrahlung (von 300 nm bis 2500 nm). Rußpigmente absorbieren in diesem Bereich die Strahlung und reduzieren so je nach Schichtdicke bzw. Konzentration den Gesamtenergiedurchlassgrad. Dadurch wird die Lichttransmission jedoch ebenfalls reduziert. Die Selektivitätskennzahl, die das Verhältnis der Lichttransmission zum Gesamtenergiedurchlassgrad beschreibt, ist in diesen Systemen daher nicht größer als bei Standardverglasungen, oder im Fall von Rußpigmenten sogar noch schlechter. Es gibt jedoch Anwendungen wie z.B. Gewächshäuser, bei denen eine hohe Selektivitätskennzahl von Vorteil ist. Eine hohe Selektivitätskennzahl erreicht man durch selektive, hohe Transmission im sichtbaren Wellenlängenbereich zwischen 380 nm und 780 nm und Abschirmung gegen IR-Strahlung (> 780 nm) als auch UV-Strahlung (< 380 nm). Diese Selektivität wird bei reflektierenden Systemen durch Interferenz erzeugt. Entweder man bedampft die Oberflächen mit Schichten unterschiedlicher Brechungsindizes bei Schichtdicken im Submikrometerbereich, oder man verwendet Pigmente, die solche Interferenzschichten bereits enthalten. Die Bedampfung der Oberfläche ist technisch sehr aufwendig und der Einsatz der Pigmente führt zu einer starken Streuung der Strahlung, wodurch die Transparenz verloren geht. Absorbierende Systeme verwenden Substanzen, die im sichtbaren Bereich eine nur geringe und im NIR-Bereich eine hohe Absorption aufweisen.

Ein Nachteil dieser Systeme liegt darin, dass die absorbierte Strahlung zu einer Erwärmung des Verglasungskörpers führt. Zeichnung 1 verdeutlicht den Sachverhalt. Die Sonnenstrahlung, bestehend aus UV-, VIS- und NIR-Strahlung trifft auf die Verglasung. Der wesentliche Teil der Strahlung im sichtbaren Bereich wird transmittiert. Der Anteil der Strahlung, der durch die Verglasung absorbiert wird, wird als langwellige Wärmestrahlung nach außen (qₐ) und in geringem Maße nach innen (qᵢ) abgegeben. Durch das erfindungsgemäße Ausnutzen der Konvektionsverhältnisse wird wesentlich mehr Wärme nach außen als nach innen abgegeben.

Der Teil der langwelligen Wärmestrahlung, der nach innen in den Raum abgegeben wird, trägt zum Gesamtenergiedurchlassgrad bei. Findet die Absorption der IR-Strahlung nur an der Außenseite des transparenten Körpers statt, dann wird der Anteil qᵢ um so kleiner, je niedriger die Wärmedurchgangszahl (k-Wert) des Verglasungskörpers ist. Dies führt zu einer deutlichen Erhöhung der Selektivitätskennzahl.
Ein weiterer Vorteil liegt in der leichten Herstellbarkeit. Im Coextrusionsverfahren können in einem kontinuierlichen Prozess Mehrfachstegplatten mit niedrigem k-Wert direkt mit einer Deckschicht, die den IR-Absorber enthält, ausgestattet werden.

### Lichttransmissionsgrad, Gesamtenergiedurchlassgrad und Selektivitätskennzahl

Der Lichtransmissionsgrad und der Gesamtenergiedurchlassgrad sind abhängig von der Art, Konzentration und Schichtdicke des IR-Absorbers in der Deckschicht, als auch von dem Basiskörper. Der geeignete Lichttransmissionsgrad ist abhängig von der Anwendung. In Gewächshäusern sollte er sehr hoch sein, da er direkt Einfluss auf den Ertrag hat. Bei Überdachungen von Fußgängerpassagen oder großflächigen Verglasungen in klimatisierten Gebäuden ist eher ein sehr niedriger Gesamtenergiedurchlassgrad wichtig. Durch weiteren Zusatz von Rußpigmenten oder anderen Farbmitteln in die Deckschicht, die sowohl im sichtbaren als auch im NIR-Bereich absorbieren, kann die Lichttransmission und gleichermaßen der Gesamtenergiedurchlassgrad noch weiter reduziert werden. Die Mindestlichttransmission sollte 30% betragen, bei Stegdoppelplatten als Basiskörper kann die max. Lichttransmission bis zu 86% betragen . Bei unbeschichteten Stegplatten beträgt die Selektivitätskennzahl ca. 1, an einseitig im Sinne der Erfindung beschichteten Systemen wurden SK-Zahlen bis über 1,4 ermittelt.

Der Kunststoffkörper hat z. B. die Gestalt einer Stegmehrfachplatte, bestehend aus mindestens zwei parallelen Kunststoffschichten, die durch senkrecht oder diagonal angeordnete Stege miteinander verbunden sind. Typische Dicken für die beiden äußeren Platten liegen zwischen 0,2 mm und 5 mm, vorzugsweise zwischen 0,5 mm und 3 mm. Typische Dicken für eventuell vorhandene innere Platten liegen zwischen 0.05 und 2 mm, vorzugsweise zwischen 0,1 mm und 1 mm. Um eine effektive Wärmedämmung zu erreichen, sollte der Abstand zwischen den Platten mindestens 1 mm, vorzugsweise mehr als 4 mm betragen. Die Stegdicke sollte zwischen 0,2 mm und 5 mm, vorzugsweise zwischen 0.5 mm und 3 mm liegen. Der geeignete Stegabstand liegt zwischen 5 mm und 150 mm, vorzugsweise zwischen 10 mm und 80 mm. Der Körper sollte in seiner Gesamtheit so gestaltet sein, dass die Wärmedurchgangszahl k nach DIN 52619 kleiner als 4 W/m²K, vorzugsweise kleiner als 3 W/m²K ist. Das Basismaterial besteht aus einem transparenten Kunststoff, geeignet sind hierfür z.B. ein Polymethylmethacrylat-Kunststoff, ein schlagzäh modifiziertes Polymethylmethacrylat (siehe z. B. EP-A 0 733 754), ein Polycarbonat-Kunststoff (verzweigtes oder lineares Polycarbonat), ein Polystyrol-Kunststoff, Styrol-Acryl-Nitril-Kunststoff, ein Polyethylentherephthalat-Kunststoff, ein glykolmodifizierter Polyethylentherephthalat-Kunststoff, ein Polyvinylchlorid-Kunststoff, ein transparenter Polyolefin-Kunststoff (z. B. durch metallocenkatalysierte Polymerisation herstellbar) oder ein Acrylnitril-Butadien-Stryrol (ABS)-Kunststoff. Es kann auch aus Mischungen (Blends) verschiedener thermoplastischer Kunststoffe bestehen. Unter Polymethylmethacrylat werden im Sinne der Erfindung steife amorphe Kunststoffe verstanden, die zu wenigstens 60 Gew.%, vorzugsweise zu wenigstens 80 Gew.% aus Methylmethacrylat aufgebaut sind. Die Polycarbonat-Kunststoffe sind vorwiegend aromatische Polycarbonate von Bisphenolen, insbesondere von Bisphenol A.

### Die IR-absorbierende Überzugsschicht

Die Überzugsschicht besteht aus einem transparenten, haftenden Bindemittel. Die Haftung soll so hoch sein, dass die Beschichtung beim Biegen des Körpers im kalten oder im thermoplastisch erwärmten Zustand nicht abspringt. Im Einzelfall richtet sich die Auswahl der verwendeten Kunststoffe nach den Erfordernissen des Beschichtungsverfahrens und den Gebrauchseigenschaften. Unter den Gesichtspunkten einer guten Haftung an vielen Kunststoffen, einer hohen Witterungs-, Vergilbungs- und Alterungsbeständigkeit sind Bindemittel auf Basis von Polacrylat- und Polymethacrylat-Kunststoffen besonders gut geeignet. Bei der Lackbeschichtung wird die Überzugsschicht aus einem flüssigen Überzugsmittel erzeugt, das neben dem Bindemittel und der IR-absorbierenden Substanz eine Trägerflüssigkeit für das Bindemittel enthält. Es kann sich um übliche Lacklösemittel handeln, wie Ester, Alkohole, Ether, Ketone, Aromaten, Chlorkohlenwasserstoffe oder deren Gemische. Bei Reaktivharzen übernehmen die mehrfunktionellen Acrylester diese Funktion. Die Menge der Trägerflüssigkeit richtet sich nach dem Verarbeitungsverfahren; sie kann z.B. 30% bis 85% des Überzugsmaterials ausmachen. Das Bindemittel kann in dem Überzugsmittel auch in dispergierter Form vorliegen, vorzugsweise in Form einer wässrigen Kunststoffdispersion. Sie kann - wie in der Anstrichtechnik geläufig - mit Verlaufshilfmitteln ausgerüstet sein. Darunter versteht man - vorwiegend hochsiedende- organische Löse- bzw. Quellmittel für den dispergierten Kunststoff.

Diese IR-Absorber-Schicht enthält eine oder mehrere Verbindungen, die eine geringe Absorption im sichtbaren Wellenlängenbereich zwischen 380 nm und 780 nm, insbesondere im Bereich zwischen 450 nm und 650 nm und eine hohe Absorption im Bereich 780 nm bis 2000 nm, insbesondere im Bereich zwischen 780 nm und 1100 nm aufweist. Diese IR-Absorber können dem Kunststoffmaterial der zusätzlichen Schicht (3) zugemischt oder auch mit diesem copolymerisiert werden. Die Konzentration des IR-Absorbers in der Deckschicht ist abhängig von seinem Extinktionskoeffizienten und der Schichtdicke der Deckschicht. Sie sollte so gewählt werden, dass der Mittelwert der Transmission der zusätzliche Schicht (3) im Wellenlängenbereich zwischen 780 nm und 1100 nm weniger als 80%, vorzugsweise weniger als 65 % beträgt. Zusätzlich kann die zusätzliche Schicht (3) UV-Absorber enthalten, die zum einen das Basismaterial und auch den IR-Absorber vor UV-Strahlung schützen und außerdem auch die Selektivitätskennzahl erhöhen, da auch der Energiedurchlaß der UV-Strahlung (ca. 5% der Gesamtenergie der Sonnenstrahlung) unterbunden wird.

### BEISPIELE

### Beispiel 1:

Als IR-Absorber wurde ein Kupferphosphatkomplex verwendet. Dieser wurde hergestellt, indem 20g Phosphorsäuremethacryloyloxyethylester (PMOE) mit 5 g Kupfer-(II)-carbonat (KCB) und 1 g H₂O in 260g Methylmethacrylat 30 min bei 50°C bis 60°C und anschließend 4h bei Raumtemperatur gerührt und abfiltriert wurde. Danach wurde 0.05% 2,2'-Azobis-(isobutyronitril) (AIBN) zugesetzt und 17 Stunden bei 40°C zwischen 2 Glasplatten mit 10 mm Abstand polymerisiert. Die fertige Polymethylmethacrylat (PMMA)-Platte ist transparent und hat eine hellblaue Farbe. Für diese Platte wurde die Lichttransmission [T(D65)], Gesamtenergiedurchlassgrad [g] und Selektivitätskennzahl [T/g] nach DIN 67 507 ermittelt. Weiterhin wurden aus dieser Platte und 3 mm dicken IRabsorberfreien Polymethylmethacrylat-Verbundsysteme hergestellt, bei denen der Plattenabstand 16mm beträgt und von diesen Verbundsystemen ebenfalls die o.g. Werte ermittelt. Diese Daten sind in Tabelle 1 dargestellt:

**Tabelle 1:**

| Anzahl Platten | Lichttransmission (D65) | Gesamtenergiedurchlassgrad | Selektivitätskennzahl |
|---|---|---|---|
| 1 | 85,1% | 65,4% | 1,3 |
| 2 | 79,1% | 56% | 1,41 |
| 3 | 73,9% | 50,7% | 1,46 |
| 4 | 69,5% | 46,7% | 1,49 |

Mit ansteigender Plattenanzahl wird die Selektivitätskennzahl größer, da die absorbierte Energie zunehmend nach außen, d.h. der Strahlungsquelle zugewandten Seite abgegeben wird.

### Beispiel 2:

Es wurde ein Stegvierfachplatte (Dicke 32 mm) aus schlagzähmodifiziertem Polymethylmethacrylat (PMMA) mit einer 100 µm dicken Coextrusionsschicht auf dem Obergurt extrudiert. Der Coextrusionschicht aus PMMA enthält 0.26% des IR-Absorbers vom Typ Quaterrylentetracarbonsäureimid-Verbindung (Uvinul® 7790 IR). In der unten aufgeführten Tabelle sind Lichttransmissionsgrad, Gesamtenergiedurchlassgrad und Selektivitätskennzahl für den einzelnen Obergurt, Obergurt und Untergurt, Obergurt, ein Zwischengurt und Untergurt, Obergurt zwei Zwischengurte und Untergurt aufgelistet.

| Anzahl Platten | Lichttransmission (D65) | Gesamtenergiedurchlassgrad g | Selektivitätskennzahl T/g |
|---|---|---|---|
| Obergurt | 78% | 67,8% | 1,15 |
| Obergurt + Untergurt | 72% | 58,5% | 1.23 |
| Obergurt + Zwischengurt + Untergurt | 67% | 54% | 1.25 |
| Obergurt + 2 Zwischengurte + Untergurt | 63% | 50% | 1.26 |

## Patentansprüche

1. Kunststoffkörper, bestehend aus einem Basisformkörper, der aus einem transparentem thermoplastischen Kunststoff-Basismaterial gefertigt ist, und der aus mindestens zwei gegenüber liegenden flächigen Schichten (1 a, 1 b) besteht, die durch senkrechte oder diagonal angeordnete Stege (2) miteinander verbunden sind, wobei eine der flächigen Schichten (1 a) mit einer zusätzlichen Schicht (3) aus einer Kunststoffmatrix aus transparentem Kunststoff-Basismaterial versehen ist,
**dadurch gekennzeichnet, dass**
die zusätzliche Schicht (3) eine IR-absorbierende Schicht ist, die einen oder mehrere, die Transparenz des Kunststoffkörpers nicht beeinträchtigenden IR-Absorber enthält, der im Bereich der nahen Infrarotstrahlung (780nm bis 1100 nm) eine mittlere Transmission von weniger als 80% aufweist, der Kunststoffkörper eine Lichttransmission (D65) von 15 bis 86%, eine Wärmedurchgangszahl von 4 W/m²K oder kleiner und eine SK-Zahl von 1,15 oder größer aufweist.

2. Kunststoffkörper nach Anspruch 1, **dadurch gekennzeichnet, daß** es sich um eine Stegdoppelplatte, eine Stegmehrfachplatte, insbesondere eine Stegdreifachplatte oder eine Stegvierfachplatte oder um eine Fachwerkstegplatte handelt.

3. Kunststoffkörper nach Anspruch 1 oder 2, **dadurch gekennzeichnet, dass** der Basisformkörper im wesentlichen aus einem Polymethylmethacrylat-Kunststoff, einem schlagzäh modifiziertes Polymethylmethacrylat, einem Polycarbonat-Kunststoff, einem Polystyrol-Kunststoff, einem Styrol-Acryl-Nitril-Kunststoff, einem Polyethylentherephthalat-Kunststoff, einem glykolmodifizierten Polyethylentherephthalat-Kunststoff, einem Polyvinylchlorid-Kunststoff, einem transparenten Polyolefin-Kunststoff, einem Acrylnitril-Butadien-Stryrol (ABS)-Kunststoff oder Mischungen (Blends) verschiedener thermoplastischer Kunststoffe bestehen.

4. Kunststoffkörper nach einem oder mehreren der Ansprüche 1 bis 3, **dadurch gekennzeichnet, dass** die zusätzliche Schicht (3) des Kunststoffkörpers eine auf den Basisformkörper aufgebrachte coextrudierte Schicht, eine Lackschicht oder eine auflaminierte Folienschicht ist.

5. Kunststoffkörper nach einem oder mehreren der Ansprüche 1 bis 4, **dadurch gekennzeichnet, daß** die zusätzliche Schicht (3) mit dem Basisformkörper nicht fest verbunden ist.

6. Kunststoffkörper nach einem oder mehreren der Ansprüche 1 bis 5, **dadurch gekennzeichnet, daß** die zusätzliche Schicht (3) aus einer Kunststoffmatrix aus einem transparenten Kunststoff-Basismaterial besteht, das ein thermoplastischer, ein thermoelastischer oder vernetzter Kunststoff ist und/oder mit dem Kunststofftyp des Basisformkörpers übereinstimmt.

7. Kunststoffkörper nach einem oder mehreren der Ansprüche 1 bis 6, **dadurch gekennzeichnet, dass** die IR-absorbierende Schicht zusätzlich einen UV-Absorber enthält.

8. Kunststoffkörper nach einem oder mehreren der Ansprüche 1 bis 7, **dadurch gekennzeichnet , dass** auf der zusätzlichen Schicht (3) eine oder auch mehrere weitere Schichten aus Kunststoff aufgebracht sind.

9. Kunststoffkörper nach einem oder mehreren der Ansprüche 1 bis 8, **dadurch gekennzeichnet , dass** der IR-Absorber eine organische Cu(II)-Phosphat-Verbindungen ist.

10. Kunststoffkörper nach Anspruch 9, **dadurch gekennzeichnet , dass** die organische Cu(II)-Phosphat-Verbindung ein Phosphorsäuremethacryloyloxyethylester/Kupfer-(11)-Komplex ist.

11. Kunststoffkörper nach einem oder mehreren der Ansprüche 1 bis 8, **dadurch gekennzeichnet, dass** der IR-Absorber ein Phthalocyaninderivat ist.

12. Kunststoffkörper nach einem oder mehreren der Ansprüche 1 bis 8, **dadurch gekennzeichnet , dass** der IR-Absorber eine Quaterrylentetracarbonsäureimid-Verbindung ist.

13. Verwendung eines Kunststoffkörper nach einem oder mehreren der Ansprüche 1 bis 12 als Verglasungs-, Überdachungs- oder Wärmedämmelement.

## Claims

1. Plastics article, composed of a base molding which has been manufactured from a transparent thermoplastic base material, and which is composed of at least two opposite sheet-like layers (1a, 1b), which have been bonded to one another by way of vertical or diagonally arranged fillets (2), where one of the sheet-like layers (1a) has been provided with an additional layer (3) composed of a plastics matrix of transparent plastics base material,
**characterized in that**
the additional layer (3) is an IR-absorbent layer which comprises one or more IR absorber(s) not impairing the transparency of the plastics article and having an average transmittance of less than 80% in the near infrared radiation region (from 780 nm to 1 100 nm), and the light transmittance (D65) of the plastics article is from 15 to 86%, its heat transfer coefficient is 4 W/m²K or smaller, and its SC is 1.15 or greater.

2. Plastics article according to Claim 1, **characterized in that** it is a double-web sandwich panel, a multi-web sandwich panel, in particular a triple-web sandwich panel or a quadruple-web sandwich panel, or is a lattice sandwich panel.

3. Plastics article according to Claim 1 or 2, **characterized in that** the base molding is substantially composed of a polymethyl methacrylate plastic, of an impact-modified polymethyl methacrylate, of a polycarbonate plastic, of a polystyrene plastic, of a styrene-acrylic-nitrile [sic] plastic, of a poly-ethylene terephthalate plastic, of a glycol-modified polyethylene terephthalate plastic, of a polyvinyl chloride plastic, of a transparent polyolefin plastic, of an acrylonitrile-butadiene-stryrene [sic] (ABS) plastic, or of a mixture (blend) of various thermoplastics.

4. Plastics article according to one or more of Claims 1 to 3, **characterized in that** the additional layer (3) of the plastics article is a coextruded layer applied to the base molding, or is a lacquer layer, or is a film layer applied by lamination.

5. Plastics molding according to one or more of Claims 1 to 4, **characterized in that** there is no irreversible bond between the additional layer (3) and the base molding.

6. Plastics article according to one or more of Claims 1 to 5, **characterized in that** the additional layer (3) is composed of a plastics matrix of a transparent plastics base material which is a thermoplastic, or a thermoelastic or crosslinked plastic and/or is identical with the type of plastic in the base molding.

7. Plastics article according to one or more of Claims 1 to 6, **characterized in that** the IR-absorbent layer also comprises a UV absorber.

8. Plastics article according to one or more of Claims 1 to 7, **characterized in that** one or more other layers composed of plastic has/have been applied to the additional layer (3).

9. Plastics article according to one or more of Claims 1 to 8, **characterized in that** the IR absorber is an organic Cu(II) phosphate compound.

10. Plastics article according to Claim 9, **characterized in that** the organic Cu(II) phosphate compound is a methacryloyloxyethyl phosphate/copper(II) complex.

11. Plastics article according to one or more of Claims 1 to 8, **characterized in that** the IR absorber is a phthalocyanine derivative.

12. Plastics article according to one or more of Claims 1 to 8, **characterized in that** the IR absorber is a quaterrylenetetracarbonimide compound.

13. Use of a plastics article according to one or more of Claims 1 to 12 as a glazing element, roofing system element, or thermal insulation element.

## Revendications

1. Corps en matière synthétique constitué d'un corps de base moulé réalisé en un matériau synthétique de base thermoplastique et transparent, et constitué d'au moins deux couches (1a, 1b) disposées à plat l'une au-dessus de l'autre et reliées l'une à l'autre par des entretoises (2) disposées perpendiculairement ou en diagonale, l'une (1a) des couches placées à plat étant dotée d'une couche supplémentaire (3) en matrice de matière synthétique constituée d'un matériau synthétique de base transparent,
**caractérisé en ce que**
la couche supplémentaire (3) est une couche d'absorption des IR qui contient un ou plusieurs agents d'absorption des IR qui ne compromettent pas la transparence du corps en matière synthétique, qui présentent dans la plage du rayonnement infrarouge proche (de 780 nm à 1 100 nm) une transmission moyenne inférieure à 80 %, le corps en matière synthétique ayant une transmission de la lumière (D65) de 15 à 86 %, un indice de percée thermique de 4 W/m²K ou moins et un indice SK de 1,15 ou plus.

2. Corps en matière synthétique selon la revendication 1, **caractérisé en ce que** c'est une plaque double à entretoises, une plaque multiple à entretoises et en particulier une plaque triple à entretoises ou une plaque quadruple à entretoises, ou une plaque à entretoises en treillis.

3. Corps en matière synthétique selon les revendications 1 ou 2, **caractérisé en ce que** le corps de base moulé est constitué essentiellement d'une matière synthétique à base de poly(méthacrylate de méthyle), de poly(méthacrylate de méthyle) modifié de manière à présenter une bonne ténacité aux chocs, d'une matière synthétique à base de polycarbonate, d'une matière synthétique à base de polystyrène, d'une matière synthétique à base de styrène-acrylonitrile, d'une matière synthétique à base de poly(téréphtalate d'éthylène), d'une matière synthétique à base de poly(téréphtalate d'éthylène) glycolé, d'une matière synthétique à base de poly(chlorure de vinyle), d'une matière synthétique à base de polyoléfine transparente, d'une matière synthétique à base d'acrylonitrile-butadiène-styrène (ABS) ou de mélanges ("blends") de différentes matières synthétiques thermoplastiques.

4. Corps en matière synthétique selon l'une ou plusieurs des revendications 1 à 3, **caractérisé en ce que** la couche supplémentaire (3) du corps en matière synthétique est une couche coextrudée appliquée sur le corps de base moulé, une couche de vernis ou une couche constituée d'une feuille stratifiée.

5. Corps en matière synthétique selon l'une ou plusieurs des revendications 1 à 4, **caractérisé en ce que** la couche supplémentaire (3) n'est pas reliée solidairement au corps de base moulé.

6. Corps en matière synthétique selon une ou plusieurs des revendications 1 à 5, **caractérisé en ce que** la couche supplémentaire (3) est constituée d'une matrice en matière synthétique dont le matériau de base est une matière synthétique transparente et qui est une matière synthétique thermoplastique, thermoélastique ou réticulée et/ou qui correspond au type de matière synthétique du corps de base moulé.

7. Corps en matière synthétique selon l'une ou plusieurs des revendications 1 à 6, **caractérisé en ce que** la couche d'absorption des IR contient en outre un agent d'absorption des UV.

8. Corps en matière synthétique selon l'une ou plusieurs des revendications 1 à 7, **caractérisé en ce qu'**une ou plusieurs autres couches en matière synthétique sont appliquées sur la couche supplémentaire (3).

9. Corps en matière synthétique selon l'une ou plusieurs des revendications 1 à 8, **caractérisé en ce que** l'agent d'absorption des IR est constitué de composés organiques de phosphate de Cu (II).

10. Corps en matière synthétique selon la revendication 9, **caractérisé en ce que** le composé organique de phosphate de Cu (II) est un ester d'acide phosphorique et de méthacryloyloxyéthyle de cuivre (II).

11. Corps en matière synthétique selon une ou plusieurs des revendications 1 à 8, **caractérisé en ce que** l'agent d'absorption des IR est un dérivé de phtalocyanine.

12. Corps en matière synthétique selon une ou plusieurs des revendications 1 à 8, **caractérisé en ce que** l'agent d'absorption des IR est un imide d'acide quaterrylène tétracarboxylique.

13. Utilisation d'un corps en matière synthétique selon l'une ou plusieurs des revendications 1 à 12 comme élément de vitrage, de toiture ou d'isolation thermique.
